# EUROPÄISCHE PATENTANMELDUNG

(11) **EP 3 425 571 A1**
(43) Veröffentlichungstag der Anmeldung: **09.01.2019**
(21) Anmeldenummer: 17179560.2
(22) Anmeldetag: 04.07.2017
(51) Int. Cl.: G06Q 10/06, G06Q 50/08

(54) **DIGITALES GEBÄUDEINFORMATIONSSYSTEM**

(71) Anmelder: Kaulquappe GmbH, 8003 Zürich (CH)
(72) Erfinder: Giera, Markus, 8003 Zürich (CH)
(74) Vertreter: Detken, Andreas

(57) **Zusammenfassung**

Ein digitales Gebäudeinformationssystem nutzt zur redundanzarmen und speicherplatzsparenden Erfassung von Eigenschaften einer Vielzahl von Objekten eines Gebäudes ein Datenmodell, das Elementklassen (E), Instanzen (I), Typen (T) und Ausnahmen (A) definiert. Das Gebäudeinformationssystem umfasst eine Datenbank, die für jede Elementklasse mehrere Deskriptoren enthält. Ein Instanzdeskriptor beschreibt eine Instanz der betreffenden Elementklasse und enthält Werte für eine Mehrzahl von Instanzattributen, darunter einen eindeutigen Instanzidentifikator und einen Typidentifikator für einen zugeordneten Typ. Ein Typdeskriptor beschreibt einen Typ der betreffenden Elementklasse und enthält Werte für eine Mehrzahl von Typattributen, darunter einen eindeutigen Typidentifikator. Ein Ausnahmedeskriptor für eine Instanz gibt an, dass bei der zugeordneten Instanz mindestens eines der Typattribute durch einen Ausnahmewert übersteuert ist.

## Beschreibung

### TECHNISCHES GEBIET

Die vorliegende Erfindung betrifft ein digitales Gebäudeinformationssystem zur redundanzarmen und speicherplatzsparenden Erfassung von Eigenschaften einer Vielzahl von Objekten eines Gebäudes, ein computerimplementiertes Verfahren zum Erstellen und Ausgeben eines Objektdatensatzes für ein Objekt eines Gebäudes und Datenträger mit einem solchen Gebäudeinformationssystem bzw. mit Anweisungen zum Ausführen eines solchen Verfahrens durch einen Prozessor.

### STAND DER TECHNIK

Viele Bereiche des täglichen Lebens stehen direkt oder indirekt in Zusammenhang mit der Planung, Erstellung, Bewirtschaftung, Nutzung oder Betrieb von Immobilien. Die Immobilienwirtschaft bildet eine volkswirtschaftliche Kategorie mit erheblicher gesamtwirtschaftlicher Relevanz.

Alle Phasen im Lebenszyklus eines Gebäudes sind geprägt durch professionelle und inhaltliche bewährte Prozesse. Ohne diese wäre es im Grund gar nicht mehr möglich, den gestiegenen Anforderungen an die bauliche Substanz (z.B. Energieeffizienz, Nachhaltigkeit, time-to-market, baurechtliche Regularien) Rechnung zu tragen.

Mehrere Faktoren bewirken jedoch, dass trotz hoher fachlicher Kompetenz die Akteure der Immobilienwirtschaft mit rückläufiger Wertschöpfung und sinkenden Umsatzrenditen zu kämpfen haben. Zusätzlich muss ein immer höherer Anteil an Akteuren, Kompetenzen und Interdisziplinarität über alle Phasen berücksichtigt und in die Prozesse einbezogen werden. Im Kern bildet sich zunehmend die Notwendigkeit, die interdisziplinäre Zusammenarbeit über die Zeit über die Phasen und in viel grösseren Teams mit immer ausdifferenzierteren Fachkompetenzen neu zu strukturieren. Von der Dualität aus aufgeklärtem Bauherren mit seinem Baumeister hin zu heterogenen Steering Commitees, die mit global verstreuten Spezialistenteams zusammenarbeiten.

Wenn man diese immer komplexere Interdisziplinarität untersucht, kommt man zur Erkenntnis, dass viele disziplininterne Prozesse sehr effizient sind und auf absehbare Zeit ihre Daseinsberechtigung haben werden. Der Flaschenhals der interdisziplinären Zusammenarbeit bildet vielmehr die Informationsübermittlung in ein interdisziplinäres, gemeinsames Projektverständnis.

Viele Informationen sind nicht explizit vorhanden, sondern finden sich ungeordnet in zahlreichen, nicht kohärent zusammenhängenden Dokumenten, Plänen, Listen und müssen von den Akteuren immer wieder neu zusammengesucht und reinterpretiert werden. Dabei entstehen Informationsverluste und Fehlinterpretationen, bereits Erarbeitetes lässt sich nicht weiternutzen, Wertschöpfung wird konstant vernichtet. Ein erheblicher Aufwand zur Fehlersuche und Herstellen von Kohärenz prägt die heutigen Prozesse rund um die bauliche Umwelt.

Mit etwas Verzögerung gegenüber anderen Branchen hält die Digitalisierung Einzug in die Bauindustrie. "Virtual Design and Construction" (VDC) und "Building Information Modelling" (BIM) bieten methodische Konzepte, die bewährten Prozesse informationstechnisch formalisieren und damit für neue digitale Möglichkeiten nutzbar machen.

Im Kern dieser neuen Methoden steht ein digitales Gebäudemodell als interdisziplinäres Informationsgefäss, in welchem Teilergebnisse der beteiligten Prozesse über die Zeit kohärent zusammengeführt, geprüft und gemeinsam verdichtet werden. Gleichzeitig lassen sich die Informationsbedürfnisse aller Disziplinen aus diesem Prozessgefäss strukturiert und in aktueller Form ableiten. Die Zusammenarbeit basiert damit auf einem digitalen Projektgefäss als «single source of truth», aus welchem alle Akteure interpretationsfrei Informationen beziehen und rückspeisen.

Das Digitale Gebäudemodell bildet somit das Vehikel um die bislang interpretationsbasierten Prozesse in informationsbasierte Prozesse zu transformieren und macht Digitalisierung erst möglich.

Aus dem Stand der Technik ist BIM-Software zum Erstellen, Pflegen und Weiterentwickeln von digitalen Gebäudemodellen an sich bekannt. Im Unterschied zur klassischen 3D-CAD-Software arbeitet BIM-Software nicht nur mit dreidimensionaler Darstellung, sondern erlaubt zusätzlich alphanumerische und topologische Informationen zu erfassen und zu pflegen. Beispielsweise stehen Objekte wie «Wand», «Türe» oder «Fenster» zur Verfügung. Diese erzeugen dreidimensionale Objekte, die gleichzeitig die parametrisch verknüpften alphanumerischen Daten erzeugen und mitführen (z.B. Breite der Wand, Durchgangsbreite einer Tür). Die Kombination der einzelnen Objekte (z.B. Türe in Wand, Wand auf Geschoss) ergibt nicht nur deren kohärente geometrische Darstellung, sondern zusätzlich ein topologisches Geflecht von Informationen (z.B. Wände auf Geschoss => Türen in Wänden => Türen pro Geschoss)

Traditionell sind die Softwarehersteller dennoch sehr stark in ihren «Heimatbranchen» verhaftet. Entsprechend sind die angebotenen Werkzeuge sehr stark auf die Anforderungen, sprich die Informationsbedürfnisse der einzelnen Disziplinen ausgelegt.

So erstellt beispielsweise ein Architekt in einer BIM-Software ein Wandobjekt und definiert die für ihn relevanten Eigenschaften wie Breite, Material und Farbe. Er erstellt damit ein Objekt mit strukturierten Informationen und übernimmt die Autorenschaft für dieses Objekt.

Die nun vorhandenen Informationen reichen jedoch bei weitem nicht aus. Es sind über den Prozess weitere Informationen an dieses Objekt anzufügen. So müssen der Brandschutz definiert, bauphysikalische Anforderungen erfasst und Kostenparameter definiert werden. Mit dem Wechsel in eine andere Phase im Lifecycle ergeben sich noch viele weitere, nicht immer antizipierbare Informationsbedürfnisse zu dieser Wand (z.B. Produkt des Anstrichs der Wand).

Grundsätzlich ist der Architekt als Autor des Objekts weder für die Erfassung noch Pflege dieser zusätzlichen Informationen zuständig. Die anderen Disziplinen haben jedoch wiederum kein Schreibrecht auf die Objekte des Architekten (andere Autorensoftware, abgegrenzte Haftung). Jede interdisziplinäre Zusammenarbeit muss daher vom Dogma «jeder erarbeitet und pflegt seine Daten selbst» ausgehen.

Bislang fehlen im Stand der Technik Lösungsansätze, wie der interdisziplinäre Teil der Informationen zu einem Objekt in einem gemeinsamen digitalen Gebäudemodell erfasst und in diesem effizient und ressourcenschonend abgelegt werden kann. Insbesondere fehlen Lösungen, wie sich immer neue Informationen durch verschiedene Akteure unabhängig von der genuinen Autorenschaft eines geometrischen Trägerobjekts einpflegen lassen. Auch fehlen Lösungen, wie sich Informationsbedürfnisse zu späteren Phasen kohärent ohne die Unterstützung der ursprünglichen Autoren in die Informationsmodelle einpflegen lassen (z.B. zur Nutzung durch das Facility Management lange nach der Erstellung eines Gebäudes).

Ein Gebäude kann eine sehr grosse Zahl von Objekten enthalten. Jedes dieser Objekte wiederum kann mit einer grossen Zahl von Eigenschaften verknüpft sein, wobei mit der Zeit immer weitere Eigenschaften hinzukommen können. Die Menge an Informationen, die in einem Gebäudemodell enthalten sind, kann dadurch sehr gross werden. Dies verlangt Konzepte zur effizienten und ressourcenschonenden Speicherung der Informationen im Gebäudemodell. Dabei ist zu berücksichtigen, dass viele der zu erfassenden Informationen redundant sind. So werden z.B. viele der Türen in einem Gebäude identische Eigenschaften wie Höhe, Breite und Brandschutzklasse aufweisen. Es daher wünschenswert, derartige Informationen möglichst redundanzarm zu erfassen.

Die Antwort auf die Fragestellungen kann nicht auf der Ebene der reinen Softwareimplementierung gefunden werden, sondern es sind technische Überlegungen nötig, wie ein Gebäude möglichst effizient und speicherplatzsparend in ein digitales Modell abgebildet werden kann.

### DARSTELLUNG DER ERFINDUNG

Die vorliegende Erfindung stellt ein digitales Gebäudeinformationssystem zur Verfügung, das es ermöglicht, Gebäudeinformationen redundanzarm zu erfassen und in komprimierter Form mit geringem Speicherplatzbedarf abzuspeichern.

Ein derartiges Gebäudeinformationssystem ist im Anspruch 1 angegeben. Weitere Ausführungsformen sind in den abhängigen Ansprüchen angegeben.

Es wird also ein digitales Gebäudeinformationssystem zur speicherplatzschonenden und redundanzarmen Erfassung von Eigenschaften einer Vielzahl von Objekten eines Gebäudes angegeben, wobei die Objekte verschiedenen Elementklassen zugeordnet sind. Das Gebäudeinformationssystem umfasst eine Datenbank, die folgende Deskriptoren enthält:
mindestens einen Instanzdeskriptor (Instanzdatensatz) für mindestens eine Elementklasse, wobei jeder Instanzdeskriptor einer Instanz der betreffenden Elementklasse zugeordnet ist und Werte für eine Mehrzahl von Instanzattributen umfasst, darunter einen eindeutigen Instanzidentifikator (Instanzschlüssel) und einen Typidentifikator für einen zugeordneten Typ (im Sinne eines Fremdschlüssels);
mindestens einen Typdeskriptor (Typdatensatz) für jede Elementklasse, wobei jeder Typdeskriptor einem Typ der betreffenden Elementklasse zugeordnet ist und Werte für eine Mehrzahl von Typattributen umfasst, darunter einen eindeutigen Typidentifikator (Typschlüssel), und
mindestens einen Ausnahmedeskriptor (Ausnahmedatensatz) für mindestens eine Elementklasse, wobei jeder Ausnahmedeskriptor einer Instanz der betreffenden Elementklasse zugeordnet ist und angibt, dass bei der zugeordneten Instanz mindestens ein Typattributwert durch einen Ausnahmewert übersteuert ist.

Die Menge aller Instanzdeskriptoren kann als Instanztabelle bezeichnet werden, die Menge aller Typdeskriptoren kann als Typtabelle bezeichnet werden, und die Menge aller Ausnahmedeskriptoren kann als Ausnahmetabelle bezeichnet werden. Es versteht sich, dass die Deskriptoren jedoch nicht zwingend in Tabellenform in der Datenbank abgespeichert sein müssen.

Das Gebäudeinformationssystem beruht auf einem Datenmodell, das Elementklassen, Instanzen mit zugeordneten Instanzattributen und Typen mit zugeordneten Typattributen definiert. Typattribute beschreiben Eigenschaften, die mehreren Objekten einer Elementklasse gemein sind. Instanzattribute beschreiben Eigenschaften, die einem Objekt individuell zugeordnet sind. Die Einteilung in Instanzen und Typen ermöglicht eine Beschreibung der Objekteigenschaften mit verringerter Redundanz. Um die Redundanz noch weiter zu verringern, definiert das Datenmodell sogenannte Ausnahmen. Eine Ausnahme führt dazu, dass der Wert eines Typattributs durch einen instanzspezifisch abweichenden Wert übersteuert wird. Dadurch wird eine äusserst redundanzarme Erfassung der Eigenschaften des Gebäudes ermöglicht. Aufgrund der verringerten Redundanz wird wesentlich weniger Speicherplatz für die Speicherung der Informationen über die Gebäudeeigenschaften benötigt. Die Gebäudeinformationen werden also redundanzarm und ohne Informationsverlust in einer komprimierten Form in der Datenbank abgelegt. Das Datenmodell erleichtert auch die Versionsverwaltung, d.h. die vollständige Erfassung aller Veränderungen des Gebäudeinformationsmodells mit Zeitstempel und Autorenangabe. Bei einer ungeordneten Erfassung der Gebäudeinformationen kann der Speicherbedarf für die Versionsverwaltung im ungünstigsten Fall exponentiell mit der Zahl der Änderungen steigen, weil eine Änderung eines einzigen Attributwertes dazu führen kann, dass eine grosse Zahl von Datenbankeinträgen geändert werden muss. Beim hier vorgeschlagenen Datenmodell kann eine Versionsverwaltung sehr einfach und mit geringem Speicherbedarf durchgeführt werden.

Die Datenbank kann für mindestens eine Elementklasse einen Elementdeskriptor enthalten, wobei der Elementdeskriptor mindestens umfasst:
einen eindeutigen Elementidentifikator; und
Informationen zum Aufbau der zugehörigen Instanzdeskriptoren und Typdeskriptoren.

Bevorzugt definiert ein Elementdeskriptor vollständig die Struktur der zugehörigen Instanzdeskriptoren und Typdeskriptoren. Die Menge aller Elementdeskriptoren kann als Elementtabelle bezeichnet werden. Die Elementtabelle definiert also vorzugsweise die Struktur der Instanztabellen und Typtabellen für die verschiedenen Elementklassen.

Auf diese Weise enthält die Datenbank sämtliche relevanten Informationen zur Datenstruktur einer jeden Elementklasse, so dass es Benutzern bzw. einem externen Programm möglich wird, ohne weitere Informationen Daten aus der Datenbank zu extrahieren, Daten in der Datenbank zu verändern oder Daten zur Datenbank hinzuzufügen.

Weitere Vorteile ergeben sich, wenn mindestens eines der Instanzattribute mindestens einer Elementklasse eine Relation (im Sinne einer weiteren Fremdschlüsselbeziehung) zu einer Instanz einer anderen Elementklasse definiert und/oder eines der Typattribute mindestens einer Elementklasse eine Relation (im Sinne einer weiteren Fremdschlüsselbeziehung) zu einem Typ einer anderen Elementklasse definiert. Auf diese Weise lassen sich Beziehungen zwischen unterschiedlichen Arten von Objekten eines Gebäudes erfassen.

Die Instanzattribute und/oder Typattribute können Angaben zum Autor mindestens eines Attributswerts umfassen. Auf diese Weise kann stets nachvollzogen werden, wer die Verantwortung für den betreffenden Attributswert trägt. Das erleichtert die schon angesprochene Versionsverwaltung.

Die Instanzattribute und/oder Typattribute können mindestens eine Benutzerberechtigung umfassen, wobei die Benutzerberechtigung mindestens eine Lese- oder Schreibberechtigung mindestens eines Benutzers oder einer Benutzergruppe für mindestens einen Attributswert definiert. Auf diese Weise kann insbesondere verhindert werden, dass Attributswerte von Benutzern überschrieben werden, die hierzu nicht autorisiert sind.

Um Daten in der Datenbank hinzufügen oder verändern zu können, kann das Gebäudeinformationssystem ausserdem mindestens eines der folgenden Module aufweisen:
ein Element-Modifikationsmodul, das dazu ausgebildet ist, Elementdeskriptoren zur Datenbank hinzuzufügen oder Elementdeskriptoren in der Datenbank zu verändern;
ein Instanz-Modifikationsmodul, das dazu ausgebildet ist, Instanzdeskriptoren zur Datenbank hinzuzufügen oder Instanzdeskriptoren in der Datenbank zu verändern;
ein Typ-Modifikationsmodul, das dazu ausgebildet ist, Typdeskriptoren zur Datenbank hinzuzufügen oder Typdeskriptoren in der Datenbank zu verändern; und
ein Ausnahme-Modifikationsmodul, das dazu ausgebildet ist, Ausnahmedeskriptoren zur Datenbank hinzuzufügen oder Ausnahmedeskriptoren in der Datenbank zu verändern.

Insbesondere kann das Gebäudeinformationssystem ein Erfassungsmodul zur Erfassung eines Objektdatensatzes für ein Objekt eines Gebäudes aufweisen, das dazu ausgebildet ist, folgendes Verfahren auszuführen:
Empfangen des Objektdatensatzes, wobei der Objektdatensatz eine Instanz einer Elementklasse beschreibt und ein oder mehrere Attributwerte, darunter einen Instanzidentifikator, enthält;
Überprüfen, ob der Objektdatensatz mindestens einen Attributwert enthält, der zu einem Typattribut gehört;
falls der Objektdatensatz mindestens einen Attributwert enthält, der zu einem Typattribut gehört, Auslesen eines zur Instanz zugehörigen Typdeskriptors aus der Datenbank und Überprüfen, ob Attributwerte des Objektdatensatzes von Typattributwerten des ausgelesenen Typdeskriptors abweichen;
falls eine Abweichung mindestens eines Attributwerts des Objektdatensatzes von einem Typattributwert des ausgelesenen Typdeskriptors festgestellt wird:
   (i) Überprüfen, ob ein entsprechender Ausnahmedeskriptor in der Datenbank existiert; und
   (ii) falls kein entsprechender Ausnahmedeskriptor existiert, Erstellen eines entsprechenden Ausnahmedeskriptors.

Das Erfassungsmodul implementiert insofern einen Algorithmus, mit dem Objektdaten zu Gebäudeobjekten redundanzarm und speicherplatzschonend erfasst werden können.

Das Erfassungsmodul kann des weiteren dazu ausgebildet sein, basierend auf den Attributwerten einen Instanzdeskriptor zu erstellen oder zu modifizieren, falls der Objektdatensatz mindestens einen Attributwert enthält, der zu einem Instanzattribut gehört. Das Erfassungsmodul kann dazu ausgebildet sein, dies zu überprüfen. Das Erfassungsmodul kann ausserdem dazu ausgebildet sein, den erstellten oder modifizierten Instanzdeskriptor und/oder Ausnahmedeskriptor in der Datenbank abzuspeichern.

Um Daten zu einem Objekt eines Gebäudes gezielt auszulesen, kann das Gebäudeinformationssystem ausserdem ein Ausgabemodul aufweisen. Dieses kann dazu ausgebildet sein, das folgende Verfahren auszuführen:
Empfangen eines Instanzidentifikators;
Auslesen mindestens eines Teils der Instanzattribute, die dem Instanzidentifikator zugeordnet sind, aus der Datenbank;
Auslesen des Typidentifikators, der dem Instanzidentifikator zugeordnet ist, aus der Datenbank;
Auslesen mindestens eines Teils der Typattribute, die dem Typidentifikator zugeordnet sind, aus der Datenbank;
Auslesen des Ausnahmedeskriptors, der dem Instanzidentifikator zugeordnet ist, aus der Datenbank;
Überprüfen, ob der Ausnahmedeskriptor leer oder nicht vorhanden ist;
falls der Ausnahmedeskriptor vorhanden und nicht leer ist und sich auf eines der ausgelesenen Typattribute bezieht, Übersteuern mindestens eines der ausgelesenen Typattribute entsprechend dem Ausnahmedeskriptor;
Erstellen eines Objektdatensatzes, der mindestens einen Teil der ausgelesenen Instanzattribute und der ausgelesenen Typattribute umfasst; und
Ausgeben des Objektdatensatzes.

Um die angewendeten Ausnahmen anzuzeigen, kann der Objektdatensatz mindestens ein Markierungsfeld umfassen, um übersteuerte Typattribute zu markieren, und das Verfahren kann das Erzeugen des Markierungsfelds umfassen.

Die Elementklassen (E), für die die Datenbank Informationen enthält, können sich insbesondere auf mindestens eine der folgenden Objektarten beziehen: Geschoss; Raum; Nutzungseinheit; Wand, insbesondere tragende Wand oder nichttragende Wand; Bodenaufbau; Abhangdecke; Halterung; Stütze; Tragwerk; Fundation; Tür; Fenster; Fassade; Treppe; Rampe; Ausstattung, insbesondere Raumausstattung; Sanitärausstattung; Geschossdecke; Platzreservation; Betonelement; Beleuchtung; Leichtbauwand; Wandoberfläche; Sanitärapparat; Verkleidung; Küche; Aussparung; Schottung.

Das Gebäudeinformationssystem vollständig in Software implementiert werden. Insbesondere kann die Datenbank als Speichermedium implementiert sein, auf dem die Elementdeskriptoren, Instanzdeskriptoren, Typdeskriptoren und Ausnahmedeskriptoren gespeichert sind. Die Deskriptoren können auch dezentral auf mehreren verschiedenen Speichermedien gespeichert sein. Der Begriff "Datenbank" ist insofern breit zu verstehen Das Gebäudeinformationssystem kann insbesondere in Form eines Computers bereitgestellt werden, der entsprechende Software aufweist. Die Software kann insbesondere ein Datenbankmodul umfassen, das die erwähnte Datenbank implementiert. Die Software kann ausserdem eines oder mehrere der erwähnten Programmmodule umfassen. Die vorliegende Erfindung stellt ausserdem einen computerlesbaren Datenträger zur Verfügung, der Anweisungen in maschinenlesbarer Form enthält, wobei die Anweisungen bei ihrer Ausführung durch einen Prozessor ein digitales Gebäudeinformationssystem der genannten Art implementieren. Der Datenträger kann insbesondere eine Datenbank der vorstehend genannten Art enthalten. Beim Datenträger kann es sich insbesondere um einen nichtflüchtigen Datenträger handeln.

Die vorliegende Erfindung bezieht sich des Weiteren auf ein Verfahren zum Erfassen von Objektdatensätzen, wie es oben in Zusammenhang mit dem Erfassungsmodul erläutert wurde, auf ein Verfahren zum Erstellen und Auslesen von Daten zu einem Objekt eines Gebäudes, wie es oben in Zusammenhang mit dem Ausgabemodul erläutert wurde, sowie auf einen computerlesbaren Datenträger, der Anweisungen enthält, die bei der Ausführung durch einen Prozessor mindestens eines der genannten Verfahren durchführen. Auch dieser Datenträger kann nichtflüchtig sein.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Darstellung des Datenmodells, das dem vorgeschlagenen Gebäudeinfonnationssystem zu Grunde liegt;
- Fig. 2: einen stark vereinfachten Planausschnitt aus einem Gebäude, wobei der Planausschnitt drei Räume mit jeweils einer Tür darstellt;
- Fig. 3: eine stark vereinfachte strukturierte Darstellung der Informationen, die einer der Türen des Gebäudes zugeordnet sind, auf der Grundlage des Datenmodells der Fig. 1;
- Fig. 4: eine stark vereinfachte, schematische Darstellung der Struktur eines Teils einer Datenbank, wobei dieser Teil Elementdeskriptoren enthält;
- Fig. 5: eine stark vereinfachte, schematische Darstellung der Struktur eines weiteren Teils einer Datenbank, wobei dieser Teil Instanzdeskriptoren, Typdeskriptoren und Ausnahmedeskriptoren enthält;
- Fig. 6: eine schematische Skizze zur Erläuterung der Art und Weise, wie in der Praxis auf die Datenbank zugegriffen wird;
- Fig. 7: eine stark schematische, beispielhafte Darstellung eines Servers, der mit Nutzern kommuniziert und Zugriffe auf die Datenbank ausführt;
- Fig. 8: einen Ablaufplan für ein beispielhaftes Verfahren, um einen Objektdatensatz zu erfassen; und

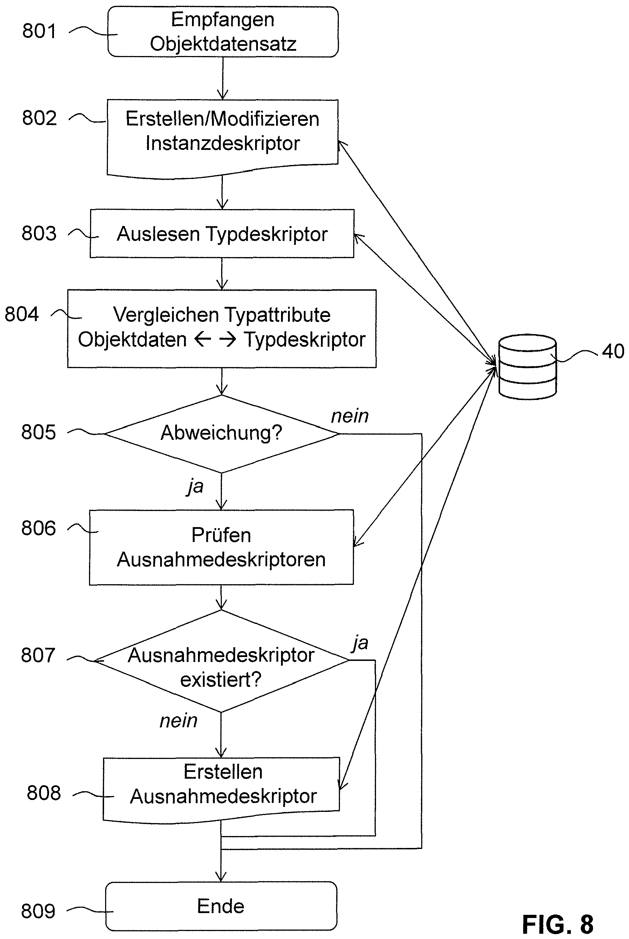

- Fig. 8: einen Ablaufplan für ein beispielhaftes Verfahren, um Daten aus der Datenbank zu extrahieren.

### BESCHREIBUNG BEVORZUGTER AUSFÜHRUNGSFORMEN

Im Folgenden werden zunächst einige grundsätzliche Überlegungen zum vorgeschlagenen Gebäudeinformationssystem festgehalten. Anschliessend wird das Gebäudeinformationssystem anhand eines Ausführungsbeispiels näher erläutert.

### Konzeptionelle Ebenen des Gebäudeinformationssystems

Das vorgeschlagene Gebäudeinformationssystem und die zugehörigen Verfahren dienen dazu, die Entstehung von Informationen, ihre Zusammenführung, Verdichtung und Nutzung im Lebenszyklus einer Immobilie explizit zu planen und nahtlose Informationsflüsse herzustellen (z.B. von der Planung in die Erstellung in den Betrieb). Die Arbeitsergebnisse unterschiedlicher Beteiligter werden synchronisiert und zu einander kohärent geordnet, sodass Informationsverluste und Fehlinterpretationen minimiert werden können. Von der ganzheitlichen Sichtweise auf geordnete Informationen profitieren alle Beteiligten.

Im Folgenden werden drei konzeptionelle Ebenen unterschieden:
a) Prozesse und Methoden
b) Informationsstrukturen und Inhalte
c) Werkzeuge und Software

### Ad a): Prozesse und Methoden

Jede im Lebenszyklus einer Immobilie beteiligte Disziplin verfügt über bewährte Prozesse und Methoden. Alle diese Prozesse lassen sich allgemein dadurch beschreiben, dass sie Informationen benötigen und Informationen erzeugen.

### Ad 2. Informationsstrukturen und Inhalte

Der Nutzwert von Informationen für Prozesse ist massgeblich durch deren Inhalt, Struktur und Qualität beeinflusst. Unvollständige Inhalte reduzieren den Nutzwert von Informationen ebenso sehr wie Inhalte, die in einer ungeeigneten Aggregation, Formatierung oder Semantik vorliegen.

Besonders wichtig für eine nachhaltige Bewirtschaftung von Informationen sind präzise definierte Informationsstrukturen, die Redundanzen vermeiden und Qualitätssicherung gewährleisten.

### Ad 3. Werkzeuge und Software

Zur Verarbeitung der Informationen in den Prozessen kommen vielfältige Werkzeuge zur Anwendung. Sie unterliegen dem schnellen Entwicklungstakt der Informationstechnologie und unterstützen die Synchronisation von Prozessen und Informationen in unterschiedlichen Graden.

Die Prozesse im Lebenszyklus eines Gebäudes sind definiert, oft lange Jahre bewährt und entwickeln sich evolutionär und langsam. Ihr hoher Entwicklungsstand bildet den Garant für eine hohe Qualität der Baukultur. Neue methodische Innovationen wie BIM bewirken deshalb nur langsam Veränderungen in diesen bewährten Prozessen.

Die Entwicklungszyklen der Werkzeuge profitieren von der schnellen Weiterentwicklung der Informationstechnologie. In kurzen Iterationen werden immer neue Werkzeuge die Leistungserbringung positiv beeinflussen.

Beide Entwicklungsgeschwindigkeiten kommen auf der Ebene der Informationsstruktur zusammen. Einerseits bewährte Prozesse, andererseits immer leistungsfähigere Werkzeuge werden durch eine präzise Definition von Strukturen und Inhalten zueinander synchronisiert und über die Zeit kompatibel und vergleichbar.

Somit stellt eine prozessbasierte und realitätsnahe, aber softwareunabhängige Definition von Datenstrukturen und Inhalten den Kern eines effizient einsetzbaren Gebäudeinformationssystems dar.

### Datenbanken im Gebäudeinformationssystem

Das vorgeschlagene Gebäudeinformationssystem basiert auf dem Gefäss des digitalen Gebäudemodells. Dieses digitale Gebäudemodell speichert alle für die Beschreibung des Gebäudes über seinen Lebenszyklus relevanten Informationen.

Traditionell versteht man unter dem digitalen Gebäudemodell ein 3D-CAD-Modell, welches um zusätzliche beschreibende Informationen ergänzt und erweitert wurde. Es erlaubt dadurch, eine Vielzahl von interdisziplinären Beiträgen in einer kohärenten Beschreibung zusammenzufassen und einer Nutzung zuzuführen.

Gebäudemodelle enthalten sowohl geometrische als auch beschreibende Informationen. Meist sind sie aus Teilmodellen zusammengesetzt (z.B. Teilmodell Architektur, Teilmodell HLK, Teilmodell Elektro). In jedem Teilmodell ist die Geometrie der jeweiligen Fachdisziplin enthalten.

In der Umsetzung einer ganzheitlichen Sichtweise auf die Gebäudeinformationen in die Praxis zeigte sich jedoch, dass bisherige 3D-CAD-Formate nicht ausreichen, um allen Anforderungen an Inhalt und Struktur der Gebäudeinformationen zu entsprechen:
- Die Informationsstruktur von bisherigen Modellen erlauben nicht, alle relevanten Informationen zu speichern.
- Bisherige Modelle arbeiten meist ausschliesslich instanzbasiert und speichern keine relationalen Beziehungen.
- Bisherige Modelle erlauben es nur, einen einzigen Bearbeitungsstand über alle enthaltenen Objekte zu speichern, es gibt keine Möglichkeit zu einer Versionierung der einzelnen Informationen.
- Die beschreibenden Informationen sind unmittelbar mit den Geometriedaten verknüpft und können entsprechend nur in der CAD-Software bearbeitet werden. Es ist also keine modellunabhängige Bearbeitung der Informationen möglich. In vielen Objekten wirken jedoch verschiedene Fachdisziplinen zusammen, die die beschreibenden Informationen bewirtschaften und pflegen müssen.

Jeder Austauschzyklus auf Basis bestehender Dateiformate ergibt somit eine nicht zu vermeidende Informationsreduktion, welche eines der Haupthemmnisse für nahtlose, synchronisierte und verlustfreie Informationsflüsse darstellt. Entsprechend schwierig gestalten sich die Umsetzung von vorgegebenen Informationsstrukturen und die Integration in und Weiterentwicklung von Unternehmensstandards.

Um diese Probleme anzugehen, umfasst das hier vorgeschlagene Gebäudeinformationssystem eine Datenbank, in der alle relevanten Informationen in einem speziell auf Gebäudeinformationen angepassten Datenmodell abgelegt sind. Die Nutzung einer intelligenten Informationsstruktur in einer Datenbank ermöglicht es, die systeminhärenten Beschränkungen der bisher verwendeten CAD-Teilmodelle aufzuheben.

Darüber hinaus lassen sich bei entsprechender Integrationstiefe mit einer Datenbank weitere Potentiale der Datenmodelle wie z.B. Live Reporting, Kollisionskontrolle der Metainformationen oder Big Data Analysen aktivieren und so der Nutzwert des Gebäudeinformationssystems erweitern.

### Zwei Anforderungsebenen

Eine kohärente, vollständige und qualitätsgesicherte Gesamtsicht aller Informationen eines Gebäudes bietet über den gesamten Lebenszyklus einen hohen Nutzwert. Zyklen der Gebäudebewirtschaftung (Erneuerung einzelner Komponenten alle 20 Jahre) unterscheiden sich zeitlich jedoch substantiell von den Entwicklungszyklen der IT- und Softwareindustrie (Softwarewechsel alle 7 Jahre). Über die Gesamtlebensdauer eines Gebäudes ist jede Entscheidung für eine Software folglich eine Momententscheidung, die zyklisch wiedererwogen werden muss.

Die Anforderungen gliedern sich deshalb in zwei Ebenen:
a) Anforderungen Inhalte und Inhaltsstrukturen (langfristige Anforderungen) und
b) Aktuelle Anforderungen aus Sicht der heutigen Technik (kurzfristige, mittelfristige Anforderungen)

### Langfristige Anforderungen

Die langfristigen Anforderungen werden erfüllt, indem das hier vorgeschlagene Gebäudeinformationssystem ein speziell für Gebäudeinformationen entwickeltes Datenmodell zur Verfügung stellt, mit den Gebäudeinformationen strukturiert abgebildet werden können. Es lässt sich mit verschiedenen Arten von Software bearbeiten und nutzen. Über Fremdschlüsselbeziehungen zwischen einzelnen Elementen (sog. Relationen) wird eine redundanzfreie Beschreibung der Bezüge zwischen Elementen (z.B. in der modularen Planung) ermöglicht.

Das hier gewählte Datenmodell erfüllt insbesondere folgende Anforderungen:
- Es ist speziell für die Beschreibung von Gebäudeinformationen optimiert.
- Es unterstützt eine strukturierte Leistungserbringung in den Prozessen während des Lifecycles eines Gebäudes.
- Es ist auf der Fachebene kommunizierbar und für die Beteiligten grundsätzlich verständlich.
- Es ist in Tabellenform darstellbar.
- Es ermöglicht eine redundanzfreie oder zumindest redundanzarme Beschreibung der Informationen.
- Es ermöglicht eine speicherplatzschonende Speicherung der Informationen.
- Es ermöglicht die Abbildung von Relationen zwischen Elementen über Fremdschlüsselbeziehungen.
- Es entspricht den Anforderungen, die sich durch eine modulare Planung ergeben.
- Es ist vielfältig anwendbar.
- Es ermöglicht eine kohärente inhaltliche Verbindung verschiedener grafischer Darstellungen (3D, 2D, Schema).
- Es ermöglicht eine flexible Erweiterung an festgelegten Stellen, z.B. durch die Definition von Projektphasen und Detaillierungsgraden (LODs).
- Es ist flexible skalierbar über zusätzliche Anforderungen oder weitere Beteiligte

Insgesamt ermöglicht das hier vorgeschlagene Datenmodell eine eindeutige und interpretationsfreie Kopplung von 3D-Modellen bzw. 3D-Teilmodellen an eine mit den Mitteln von Datenbanken abzubildende alphanumerische Datenwelt.

### Kurz- und mittelfristige Anforderungen

Um die kurz- und mittelfristigen Anforderungen zu erfüllen, stellt das Gebäudeinformationssystem Schnittstellenmodule zur Verfügung, die eine nahtlose Integration des Systems in bestehende Softwareapplikationen ermöglichen.

### Datenmodell vs. Datensichten

Vom Datenmodell zu unterscheiden sind die Sichten auf das Datenmodell. Das Datenmodell dient der redundanzfreien oder zumindest redundanzarmen Speicherung der Gebäudeinformationen. Über die Sichten lassen sich die gespeicherten Daten in geeigneter Form aggregieren, prüfen, darstellen und auswerten.

Beispiel: So ist es nicht notwendig, die aktuelle Anzahl der Steckdosen eines Raums als Attribut des Raums vorzusehen, da hierdurch eine redundante Information zum 3D-Modell entsteht. Besser ist es jede Steckdose mit einer Raumzuordnung als Attribut zu versehen. Wenn festgestellt werden soll, wie viele Steckdosen in einem Raum vorhanden sind, lassen sich die entsprechenden Informationen über Datenbankfunktionen in kohärenter Form extrahieren und zusammenführen.

### Definition des Datenmodells

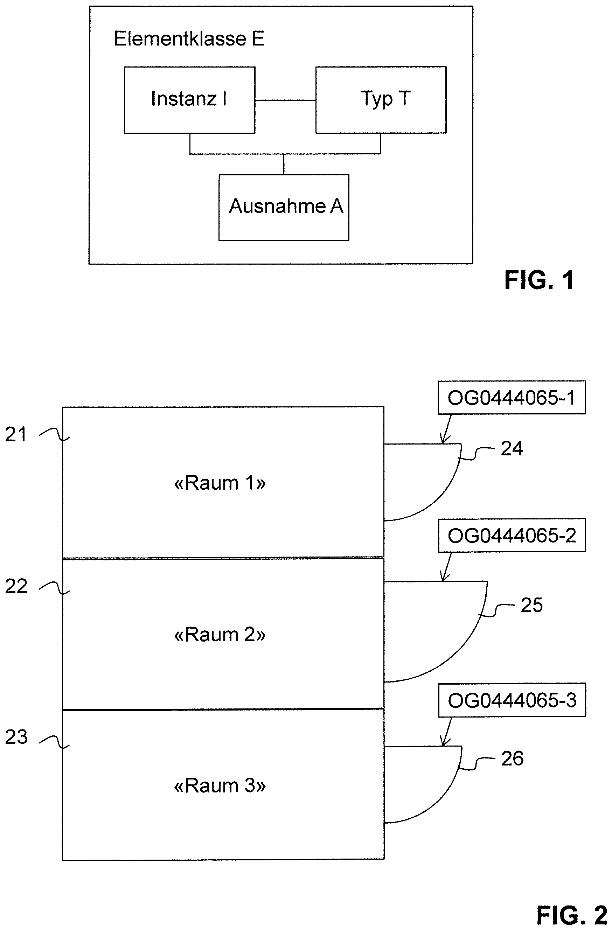

In der Figur 1 ist das Datenmodell, das dem vorgeschlagenen Gebäudeinformationssystem zu Grunde liegt, in schematischer Weise dargestellt. Ein Gebäude gliedert sich in eine Vielzahl verschiedener konkreter Objekte wie eine oder mehrere Eingangstüren, mehrere Zimmertüren, mehrere Flurtüren, mehrere Aussenwände, mehrere Zwischenwände usw.

Um die Objekte systematisch zu erfassen und zu gliedern, werden zunächst "Elementklassen" E definiert. So kann es z.B. eine Elementklasse "Tür" oder eine Elementklasse Wand" geben. Eine Elementklasse ist eine Klasse von Objekten, die durch dieselbe Art von Eigenschaften beschreibbar sind. Diese Eigenschaften werden als "Attribute" erfasst. Mögliche Attribute für die Elementklasse "Tür" sind beispielsweise ihre lichte Höhe, lichte Breite, Dicke, Brandschutzklasse, Schallschutzklasse, Material, Farbe, das Geschoss, in dem die Tür eingebaut ist, usw. Mögliche Attribute für die Elementklasse "Wand" sind beispielsweise ihre Länge, Höhe, Fläche, Dicke, ihr Aufbau, ein Feld, das angibt, ob es sich um eine tragende Wand handelt oder nicht, ein Feld, das angibt, ob es sich um eine Aussenwand handelt oder nicht, die Farbe, das Material, das Geschoss, in dem sich die Wand befindet, usw. Mit Hilfe der Elementklassen kann die Vielzahl an Objekten eines Gebäudes in Klassen eingeteilt und strukturiert werden. Alle Objekte derselben Elementklasse lassen sich durch dieselbe Attributierung beschreiben. Datentechnisch wird eine Elementklasse durch einen Elementdeskriptor beschrieben. Der Elementdeskriptor legt insbesondere fest, welche Attribute einer Elementklasse zugeordnet sind, und welche Eigenschaften diese Attribute haben. Solche Eigenschaften können z.B. die Art des Attributs, der Datentyp (Text, Integerwert, Gleitkommawert, Boolescher Wert usw.), die zugeordnete physikalische Einheit (z.B. Meter, Quadratmeter usw.), den Detaillierungsgrad (LOD), Autorinformationen usw. umfassen.

Ein konkretes Objekt im Gebäude wird als eine "Instanz" I eines Elements der Elementklasse E bezeichnet. Beispielsweise sind alle Türen in einem Gebäude Instanzen eines Elements der Elementklasse "Tür", oder alle Wände in einem Gebäude sind Instanzen eines Elements der Elementklasse "Wand". Bei den zugeordneten Attributen handelt es sich entsprechend um alphanumerische Daten, die eine Instanz eines Elements beschreiben.

In der Praxis werden viele Instanzen I eines Elements identische Werte für bestimmte Attribute aufweisen. So werden z.B. häufig in einem Gebäude eine Vielzahl von Türen vorhanden sein, die genau die gleiche lichte Höhe, lichte Breite, Dicke, Brandschutzklasse und Schallschutzklasse aufweisen. Um die dadurch entstehende Redundanz zu vermeiden oder zumindest zu vermindern, definiert das vorliegende Datenmodell sogenannte "Typen" T. In einem Typ T werden Attribute zusammengefasst, deren Werte für eine Vielzahl von Instanzen eines Elements derselben Elementklasse identisch sind ("Typattribute"). Jede Instanz I eines Elements referenziert über eine Fremdschlüsselbeziehung einen Typ T. Die im Typ T hinterlegten Typattribute gelten gleichermassen für alle Instanzen, die den Typ T referenzieren. Sie können zentral an einer Stelle gepflegt werden. Wenn es im Gebäude N Instanzen eines Elements gibt, die denselben Typ T referenzieren, stellt die Instanz-Typ-Beziehung eine N:1-Beziehung dar. Durch die Einführung von Typen wird so ein normalisiertes, hierarchisches Datenmodell mit einer N:1-Beziehung geschaffen. Sowohl der Speicherbedarf für die Typattribute als auch der Aufwand für die Pflege der Typattribute verringern sich um den Faktor N. Datentechnisch wird der Typ durch einen Typdeskriptor dargestellt. Im Typdeskriptor sind insbesondere alle Typattribute zusammengefasst. Zu den Typattributen gehört als Schlüssel insbesondere auch ein Typidentifikator, der es ermöglicht, den Typ eindeutig zu identifizieren.

Für jeden Typ T lässt sich die Menge von zugehörigen Typattributen abhängig vom Detaillierungsgrad (LOD) beliebig anpassen, erweitern und durch Autorenangaben verändern, ohne dass diese Redefinitionen für die Instanzen im 3D-CAD-Modell einzelnen nachgeführt werden müssten. Es ergibt sich ein datentechnisch schlankes Gebäudemodell.

Alle Attribute eines Elements, die nicht Typattribute sind, sind instanzspezifische Attribute ("Instanzattribute"). Diese Attribute lassen sich nicht weiter normalisieren. Idealerweise werden die meisten Instanzattribute automatisch durch die 3D-CAD-Software erzeugt, die mit dem Gebäudeinformationssystem zusammenwirkt, und nur wenige Instanzattribute müssen manuell eingegeben werden. So ist beispielsweise die Angabe des Geschosses, in dem sich eine Tür befindet, ein Instanzattribut. Dieses Instanzattribut kann automatisch durch die 3D-CAD-Software erzeugt werden, wenn diese Software die Koordinaten der Tür im Gebäude kennt. Wenn die Türen eine individuelle Beschriftung tragen, die sich von Tür zu Tür unterscheidet, handelt es sich bei der Beschriftung ebenfalls um ein Instanzattribut. Dieses Instanzattribut muss in der Regel manuell eingegeben werden. Eines der Instanzattribute in der vorliegenden Datenstruktur ist der Instanzidentifikator, der es im Sinne eines Schlüssels ermöglicht, die Instanz eindeutig zu identifizieren. Ein anderes Instanzattribut ist der Typidentifikator, der festlegt, welcher Typ T der betreffenden Instanz I zugeordnet ist.

Instanzen können im Verhältnis zu Instanzen anderer Elementklassen stehen. So referenzieren beispielsweise alle Türen, die sich in einem bestimmten Geschoss befinden, dieselbe Instanz der Elementklasse "Geschoss". Ein Attribut, das auf eine Instanz oder einen Typ einer anderen Elementklasse verweist, wird als eine "Relation" bezeichnet. Neben Relationen einer Instanz einer Elementklasse zu einer Instanz einer anderen Elementklasse (z.B. eine Instanz des Elements "Tür" verweist auf eine Instanz des Elements "Geschoss") sind auch Relationen eines Typs einer Elementklasse zu einem Typ einer anderen Elementklasse möglich (z.B. die Typdefinition des Elements "Raum" verweist auf die Typdefinition des Elements "Volumenstromregler"). Die "Relationen" sind also Fremdschlüsselbeziehungen von einer Elementklasse zu einer anderen Elementklasse. Diese Fremdschlüsselbeziehungen ermöglichen es, die Struktur eines Gebäudes in eine Datenstruktur aus alphanumerischen Daten abzubilden.

In bestimmten Fällen kann es sinnvoll sein, ein ausgewähltes Typattribut eines Typs T, der durch eine Instanz I referenziert wird, selektiv nur für diese eine Instanz I zu verändern. Dazu werden in der hier vorgeschlagenen Datenstruktur sogenannte "Ausnahmen" A definiert. Statt also einen separaten neuen Typ T' zu definieren, der sich vom Typ T nur durch dieses eine Typattribut unterscheidet und der möglicherweise nur durch diese eine einzelne Instanz referenziert würde, oder statt das betreffende Typattribut zu einem Instanzattribut zu machen, sodass dieses Attribut einzeln in jeder Instanz nachgeführt werden müsste, wird gezielt ein Typattribut durch die Ausnahme A verändert. Die hierarchische Instanz-Typ-Beziehung bleibt also unverändert, und es wird nur eine Abweichung hiervon erfasst und gespeichert. Durch die Einführung der Ausnahmen A wird der Grad an Redundanz im Gebäudeinformationssystem nochmals erheblich vermindert. Entsprechend wird auch der Speicherbedarf für die Speicherung der im Gebäudeinformationssystem enthaltenen Informationen erheblich verringert.

### Beispiel: Planausschnitt mit Türen

Das oben entwickelte Datenmodell wird im Folgenden anhand der Figuren 2-5 näher erläutert.

Die Figur 2 zeigt in stark schematischer Weise einen vereinfachten Planausschnitt aus einem Gebäude. Der hier dargestellte Planausschnitt zeigt drei Räume 21, 22, 23 mit jeweils einer Tür 24, 25, 26. Jede dieser Türen stellt eine Instanz des Elements "Tür" dar. Mit jeder dieser Türen ist ein Instanzidentifikator (Instanzschlüssel) verknüpft. So trägt im vorliegenden Beispiel die Tür 24 den Instanzidentifikator "OG0444065-1", die Tür 25 trägt den Instanzidentifikator "OG0444065-2", und die Tür 26 trägt den Instanzidentifikator "OG0444065-3". Der Instanzidentifikator ermöglicht es, jedes Objekt im Gebäude eindeutig zu identifizieren. Ein Instanzidentifikator darf also für ein bestimmtes Gebäude nicht zweimal vergeben werden.

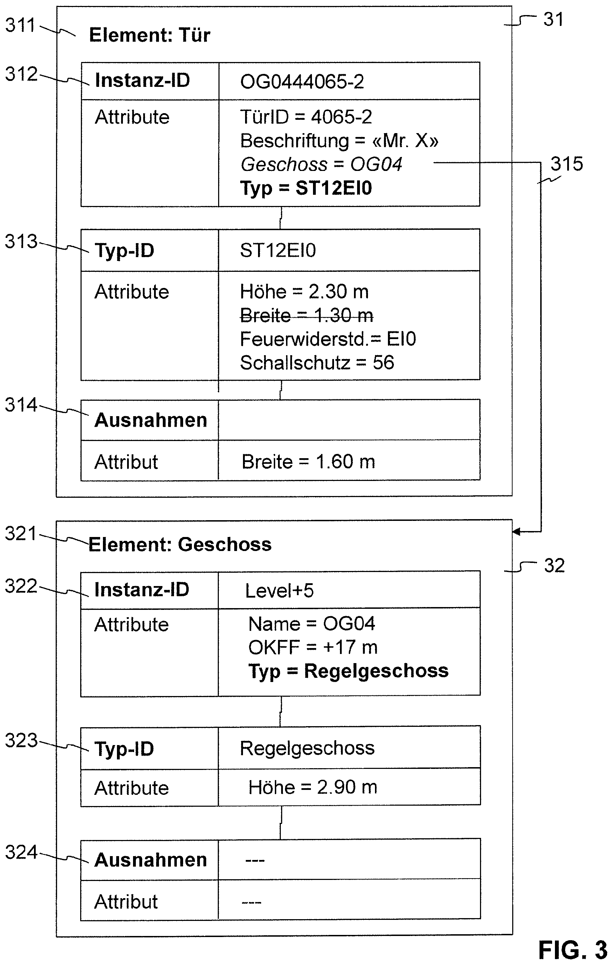

Die Figur 3 zeigt in stark schematischer Weise eine Darstellung der Informationen, die mit der Tür 25 der Fig. 2 verknüpft sind, wobei die Informationen entsprechend dem Datenmodell der Fig. 1 strukturiert sind. Das Beispiel der Figur 3 ist sehr stark vereinfacht, und in der Realität wird mit einer Tür eine wesentlich grössere Zahl von Informationen verknüpft sein, als dies in dem vorliegenden Beispiel der Fall ist.

Die Tür 25 wird vollständig durch einen Objektdeskriptor 31 beschrieben. Der Objektdeskriptor 31 umfasst einen Elementidentifikator 311, einen Instanzdeskriptor 312, einen Typdeskriptor 313 und einen Ausnahmedeskriptor 314.

Der Elementidentifikator 311 legt fest, zu welcher Elementklasse E das Objekt zugeordnet ist. Im vorliegenden Beispiel definiert der Elementidentifikator 311, dass es sich um ein Element der Klasse "Tür" handelt.

Der Instanzdeskriptor 312 fasst die Instanzattribute für die Instanz I des Elements zusammen. Darunter befindet sich insbesondere der vorstehend schon erwähnte Instanzidentifikator "OG0444065-2", der es ermöglicht, die vorliegende Instanz eindeutig zu identifizieren. Des weiteren befinden sich im vorliegenden Beispiel unter den Instanzattributen eine vereinfachte TürID (,4065-2"), die es ermöglicht, die Tür auf übersichtliche Weise in einem Plan zu bezeichnen, eine individuelle Beschriftung der Tür ("Mr. X"), eine Angabe des Geschosses, in dem sich die Tür befindet ("OG04"), und eine Angabe des Typs T, der der vorliegenden Instanz I des Elements "Tür" zugeordnet ist ("ST12EI0").

Der Typdeskriptor 313 beschreibt den zugehörigen Typ T des Elements, der dem Typidentifikator ST12EI0 entspricht. Er enthält Typattribute wie die lichte Höhe, die lichte Breite, den Feuerwiderstand oder die Schallschutzklasse. Im vorliegenden Beispiel legen die Typattribute fest, dass der Typ ST12EI0 des Elements "Tür" eine lichte Höhe von 2.30 m, eine lichte Breite von 1.30 m, einen Feuerwiderstand der Klasse EI0 und ein Schallschutz der Klasse 56 aufweist. Da eine grosse Zahl von Türen im Gebäude diese Eigenschaften aufweist, wurden diese Eigenschaften als Typattribute und nicht als Instanzattribute definiert. So weisen beispielsweise auch die benachbarten Türen 24 und 26 der Figur 2 dieselben Eigenschaften auf und sind daher demselben Typ ST12EI0 zugeordnet.

Allerdings weicht im vorliegenden Beispiel die Tür 25 in Hinblick auf eines der Typattribute, nämlich die Breite, von allen anderen Türen des Typs ST12EI0 ab. Statt einer Breite von 1.30 m, wie dies durch die Typattribute festgelegt ist, weist die Tür 25 eine Breite von 1.60 m auf. Um diese Abweichung zu beschreiben, wird eine Ausnahme A definiert. Die Ausnahme A wird durch einen Ausnahmedeskriptor 314 beschrieben. Der Ausnahmedeskriptor 314 besagt, dass nur für die vorliegende Instanz I der Wert 1.30 m des Typattributs "Breite" mit dem Wert 1.60 m übersteuert wird.

Durch die Definition der Ausnahme A wird vermieden, dass die gesamte Struktur für die Beschreibung des Elements "Tür" (also die Definition der Elementklasse "Tür") verändert werden muss und dadurch unnötige Redundanz geschaffen wird. Eine erste Alternative zur Definition der Ausnahme A bestünde nämlich darin, das Attribut "Breite" zu einem Instanzattribut statt zu einem Typattribut zu machen. Dadurch müsste allerdings für sämtliche Türen im Gebäude die Breite der Tür individuell bei den Instanzattributen eingetragen werden. Da die weit überwiegende Zahl von Türen dieselbe Breite aufweist, entstünde dadurch unnötige Redundanz. Zudem wäre die Nachführung der Daten zu den Türen im Gebäude sehr stark erschwert. Eine zweite Alternative zur Definition der Ausnahme A bestünde darin, für die Tür 25 einen separaten Typ zu definieren. Dieser Typ würde sich vom schon vorhandenen Typ ST25EI0 nur durch den Wert eines einzigen Typattributs, nämlich des Attributs "Breite", unterscheiden. Der zugehörige Typdeskriptor würde sich also nur in einem einzigen Feld unterscheiden. Auch hierdurch würde wiederum unnötige Redundanz erzeugt. Insgesamt vermeidet also die Definition der Ausnahme A die Schaffung von Redundanz. Gleichzeitig ermöglicht die Definition der Ausnahme A, die Informationen im Gebäudeinformationssystem mit minimalem Speicherplatzbedarf abzuspeichern.

Eine weitere Besonderheit besteht im vorliegenden Beispiel darin, dass der Instanzdeskriptor des Elements "Tür" ein Instanzattribut "Geschoss" enthält, welches auf eine Instanz eines Elements einer anderen Klasse, nämlich der Elementklasse "Geschoss", verweist. Eines der Instanzattribute ist im vorliegenden Beispiel also eine Relation 315 zu einer Instanz einer anderen Elementklasse. Im vorliegenden Beispiel verweist das Instanzattribut "Geschoss" im Instanzdeskriptor der Tür 25 auf eine Instanz des Elements "Geschoss" mit dem Instanzidentifikator "Level+5" und enthält das Instanzattribut "Name" dieser Instanz, wobei dieses Instanzattribut im vorliegenden Fall den Wert "OG04" annimmt. Durch Relationen lassen sich also per Fremdschlüsselbeziehung Attributswerte von Instanzen andere Elementklassen zu einem Instanzdeskriptor hinzufügen.

### Umsetzung mit Datenbank

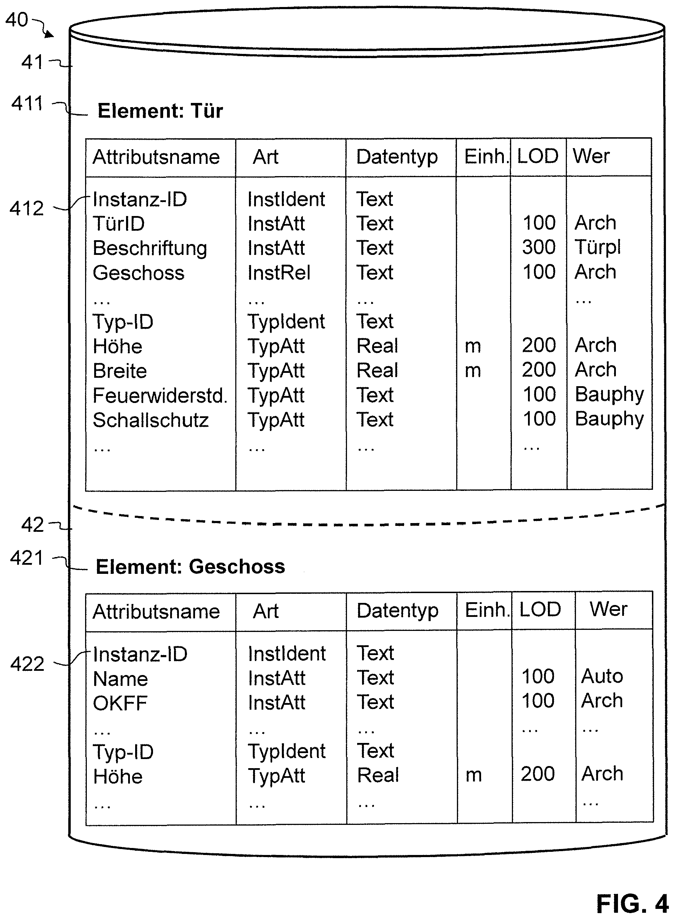

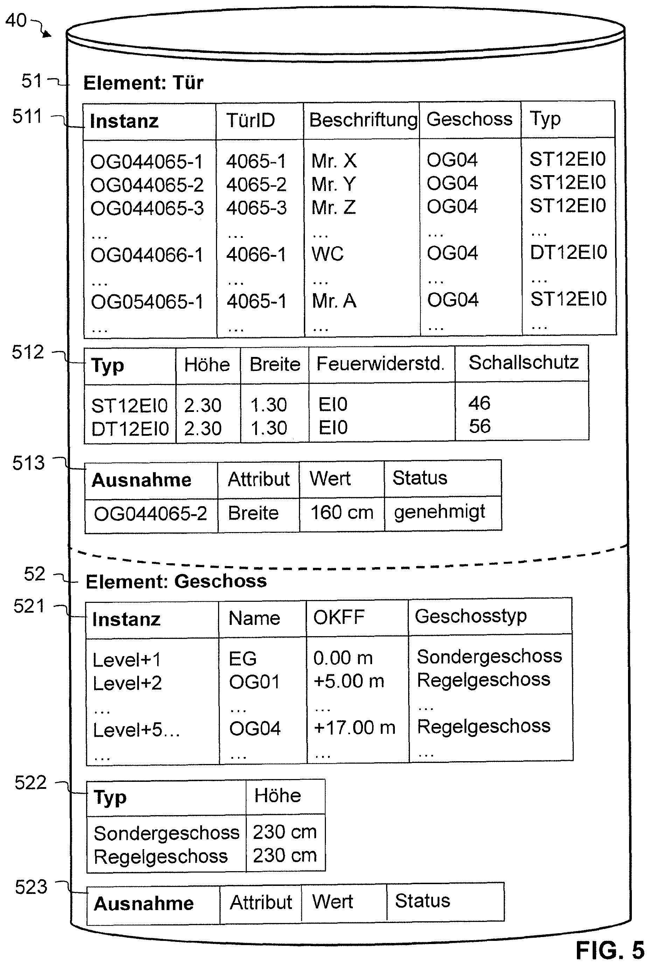

Anhand der Figuren 4 und 5 wird nun der Aufbau einer Datenbank, in der die Informationen des Gebäudeinformationssystems gespeichert sind, beispielhaft illustriert. Die Datenbank enthält mehrere Teile, wobei ein erster Teil, welcher Elementdeskriptoren enthält, in der Figur 4 illustriert ist, während ein zweiter Teil, welcher Instanzdeskriptoren, Typdeskriptoren und Ausnahmedeskriptoren enthält, in der Figur 5 illustriert ist.

Der Teil der Datenbank 40, der in der Figur 4 illustriert ist, enthält für jedes Element des Gebäudeinformationssystems den zugehörigen Elementdeskriptor. Im vorliegenden Beispiel sind stark vereinfachte Elementdeskriptoren für die Elementklassen "Tür" und "Geschoss" dargestellt.

Jeder Elementdeskriptor 41, 42 enthält einen Elementidentifikator 411, 421 sowie Informationen 412, 422 zum Aufbau der zugehörigen Instanzdeskriptoren und Typdeskriptoren. Im vorliegenden Beispiel liegen diese Informationen in Form einer Tabelle vor. Die Tabelle enthält im vorliegenden, stark vereinfachten Beispiel in der ersten Spalte eine Liste von Attributen. In der zweiten Spalte wird definiert, um welche Art von Attribut es sich beim betreffenden Attribut handelt. Beispielsweise kann es sich um einen Instanzidentifikator (Art "InstIdent"), ein normales Instanzattribut (Art "InstAtt"), eine Instanzrelation (Art "InstRel"), einen Typidentifikator (Art "TypIdent") oder ein normales Typattribut (Art "TypAtt") handeln. In der dritten Spalte wird der Datentyp des betreffenden Attributs definiert. Beispielsweise kann es sich um normalen Text (Datentyp "Text"), um einen Gleitkommawert (Datentyp "Real") oder einen Booleschen Wert (Datentyp "Boolean") handeln. In der vierten Spalte wird die Einheit, die dem Attributswert zugeordnet ist, festgelegt. In der fünften Spalte findet sich der Detaillierungsgrad (LOD), der dem Attribut zugeordnet ist, in der sechsten Spalte die Benutzerberechtigung, um den Wert des entsprechenden Attributs zu verändern. Es versteht sich von selbst, dass jede Tabelle auch andere Spalten und eine weit grössere Zahl von Spalten enthalten kann, und dass die Darstellung der darin enthaltenen Informationen auch auf andere Weise als eine Tabelle erfolgen kann.

Der Teil der Datenbank 40, der in der Figur 5 illustriert ist, enthält für jedes Element mit Elementidentifikator 51, 52 eine Instanztabelle, d.h. eine Menge von Instanzdeskriptoren 511, 521, eine Typtabelle, d.h. eine Menge von Typdeskriptoren 512, 522, und eine Ausnahmetabelle, d.h. eine Menge von Ausnalunedeskriptoren 513, 523.

Jeder Instanzdeskriptor 511, 521 ist so aufgebaut, wie dies durch den zugehörigen Elementdeskriptor (Figur 4) festgelegt ist. Er umfasst die Werte sämtlicher Instanzattribute einer bestimmten Instanz I eines Elements der Klasse E. Im vorliegenden Beispiel umfasst jeder Instanzdeskriptor 511 für eine Instanz des Elements "Tür" die Werte für den Instanzidentifikator, für die Attribute "TürID", "Beschriftung" und "Geschoss" und den zugehörigen Typidentifikator.

Auch jeder Typdeskriptor 512, 522 ist so aufgebaut, wie dies durch den zugehörigen Elementdeskriptor (Figur 4) festgelegt ist. Er umfasst die Werte sämtlicher Typattribute eines bestimmten Typs T eines Elements E. Im vorliegenden Beispiel umfasst jeder Typdeskriptor 512 für das Element "Tür" die Werte für den Typidentifikator, die Höhe, die Breite, den Feuerwiderstand und die Schallschutzklasse.

Jeder Ausnahmedeskriptor 513, 523 enthält einen Instanzidentifikator, die Angabe eines Typattributs sowie den Wert, mit dem dieses Typattribut übersteuert wird. Die Ausnahmetabelle kann auch leer sein, wenn zu einer Elementklasse E keine Ausnahmen definiert wurden. Im vorliegenden Beispiel ist z.B. die Ausnahmetabelle zur Elementklasse "Geschoss" leer.

Alle genannten Deskriptoren können noch weitere Angaben enthalten. So enthält im vorliegenden Beispiel der Ausnahmedeskriptor noch ein Statusfeld, welches angibt, ob die betreffende Ausnahme genehmigt wurde oder nicht.

### Benutzerberechtigungen und Autorinformationen

Das vorliegende Gebäudeinformationssystem ermöglicht es nicht nur, Gebäudeinformationen mit geringem Speicherplatzbedarf und redundanzarm zu speichern, sondern ermöglicht es auch solche Informationen gezielt nur bestimmten Akteuren zur Verfügung zu stellen bzw. nur bestimmten Akteuren zu erlauben, Gebäudeinformationen im System zu verändern.

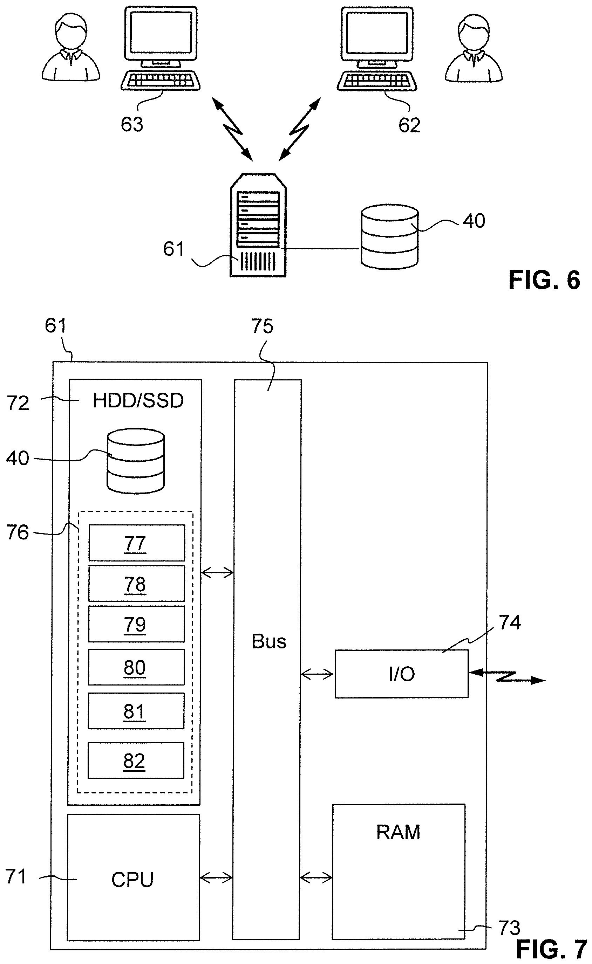

Dies ist in der Figur 6 schematisch illustriert. In der Ausführungsform der Figur 6 ist die Datenbank 40 an einen Server 61 angebunden, welcher über ein Netzwerk mit mehreren Clientcomputern 62, 63 kommuniziert. Die Clientcomputer 63, 64 werden von verschiedenen Arten von Benutzern verwendet. Beispielsweise wird der Clientcomputer 63 von einem Architekten verwendet, während der Clientcomputer 64 von einem Elektroplaner verwendet wird. Die unterschiedlichen Arten von Benutzern (Benutzergruppen) bzw. die unterschiedlichen Benutzer haben unterschiedliche Berechtigungen, auf Daten in der Datenbank 40 zuzugreifen. So ist es beispielsweise dem Elektroplaner nicht erlaubt, die Elementdeskriptoren oder die Typattribute von Wänden oder Türen zu verändern. Entsprechend kann zu jedem Feld eines Elementdeskriptors, eines Instanzdeskriptors oder eines Typdeskriptor eine spezifische Benutzerberechtigung in der Datenbank abgespeichert sein. Sofern einer der Benutzer Daten in der Datenbank verändert, kann vorgesehen sein, dass der Autor der betreffenden Daten gemeinsam mit diesen Daten in der Datenbank abgespeichert wird.

### Mögliche Implementierung auf Server

Die Figur 7 illustriert in schematischer Weise einen möglichen Aufbau eines Servers zur Implementierung eines Gebäudeinfonnationssystems gemäss der vorliegenden Erfindung. Der Server weist einen Prozessor (CPU) 71, ein nichtflüchtiges Speichermedium 72, z.B. in Form einer herkömmlichen Festplatte (HDD) oder in Form eines Flashspeichers (SSD), einen Arbeitsspeicher (RAM) 73 und eine oder mehrere Ein-/Ausgabeschnittstellen 74, z.B. in Form eines USB-Anschlusses, eines Ethernet-Anschlusses, einer drahtlosen Datenkommunikationsschnittstelle usw. auf. Ein Bussystem 75 ermöglicht den Austausch von Daten und Programminstruktionen zwischen den genannten Komponenten.

### Ein-/Ausgabemodule

In dem Speichermedium 72 ist einerseits die vorstehend schon erläuterte Datenbank 40 gespeichert, und andererseits sind auf dem Speichermedium 72 verschiedene Programmmodule 77, 78, 79, 80, 81 gespeichert, welche bei ihrer Ausführung durch den Prozessor 71 diesen veranlassen, bestimmte Verfahren auszuführen. Der Aufruf eines dieser Programmmodule kann direkt durch einen Benutzer, durch eine entsprechende Anfrage eines Clients an den Server über die Ein-/Ausgabeschnittstelle 74 oder automatisiert durch ein anderes Programmodul erfolgen.

So dient ein Element-Modifikationsmodul 77 dazu, Elementdeskriptoren zur Datenbank 40 hinzuzufügen oder Elementdeskriptoren in der Datenbank 40 zu verändern. Ein Instanz-Modifikationsmodul 78 ist dazu ausgebildet, Instanzdeskriptoren zur Datenbank 40 hinzuzufügen oder Instanzdeskriptoren in der Datenbank 40 zu verändern. Ein Typ-Modifikationsmodul 79 dient dazu, Typdeskriptoren zur Datenbank 40 hinzuzufügen oder Typdeskriptoren in der Datenbank 40 zu verändern; und ein Ausnahme-Modifikationsmodul 80 ist dazu ausgebildet, Ausnahmedeskriptoren zur Datenbank 40 hinzuzufügen oder Ausnahmedeskriptoren in der Datenbank 40 zu verändern. Auf diese Weise können bestimmte Einträge der Datenbank gezielt hinzugefügt werden oder verändert werden.

Hierauf basierend können komplexere Module aufgebaut werden. So kann ein Erfassungsmodul 81 bereitgestellt werden, um Eigenschaften eines Objekts im Gebäude zu erfassen und Einträge in der Datenbank entsprechend zu ergänzen oder zu verändern. Ein Verfahren, welches vom Erfassungsmodul 81 durchgeführt wird, ist beispielhaft in der Figur 8 illustriert. In Schritt 801 empfängt das Modul von einem Benutzer oder über die Ein-/Ausgabeschnittstelle einen Objektdatensatz. Dieser bezieht sich auf eine Instanz I einer bestimmten Elementklasse E, also z.B. auf eine bestimmte Tür im Gebäude. Der Objektdatensatz kann dabei z.B. eine komplette Beschreibung, also eine vollständige Liste von Attributwerten, einer neu ins Modell eingefügten Tür enthalten, oder er kann zu einer schon existierenden Tür ein oder mehrere geänderte Attributwerte enthalten. Unter den Attributwerten des Objektdatensatzes befindet sich jedenfalls ein Attributwert, der eine eindeutige Identifikation der betreffenden Instanz erlaubt. In Schritt 802 prüft das Modul zunächst, ob in der Datenbank 40 schon ein zugehöriger Instanzdeskriptor existiert. Falls nicht, wird dieser neu erstellt. Falls der Instanzdeskriptor schon existiert, und falls der Objektdatensatz mindestens einen geänderten Instanzattributwert enthält, wird der Instanzdeskriptor durch das Modul entsprechend verändert. In Schritt 803 prüft das Modul dann, ob der Objektdatensatz mindestens einen Attributwert enthält, der zu einem Typattribut gehört. Falls dies der Fall ist, liest das Modul den zur Instanz I zugehörigen Typdeskriptor aus der Datenbank 40 aus. In Schritt 804 vergleicht das Modul diejenigen Attributwerte des Objektdatensatzes, die zu Typattributen gehören, mit den Typattributwerten des ausgelesenen Typdeskriptors. Falls der Objektdatensatz Attributwerte enthält, die von Typattributwerten des ausgelesenen Typdeskriptors abweichen (Entscheidung 805), prüft das Modul in Schritt 806, ob ein entsprechender Ausnahmedeskriptor in der Datenbank existiert. Falls dies nicht der Fall ist (Entscheidung 807), erstellt das Modul in Schritt 808 einen entsprechenden Ausnahmedeskriptor. Das Modul beendet die Ausführung des Verfahrens in Schritt 809.

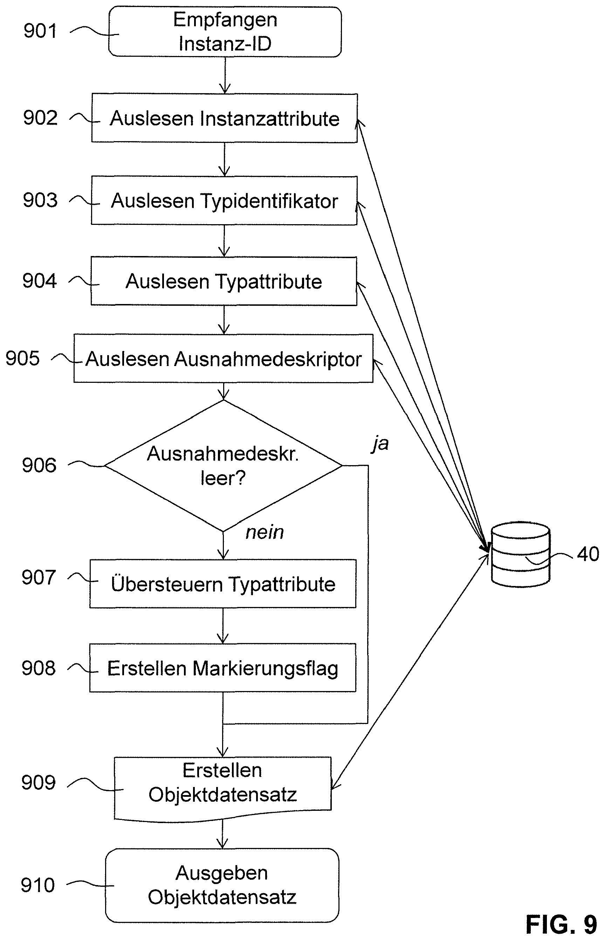

Um gezielt Daten zu einem Objekt eines Gebäudes aus der Datenbank zusammenstellen und abrufen zu können, wird ausserdem ein Ausgabemodul 82 bereitgestellt. Ein Verfahren, welches vom Ausgabemodul 82 durchgeführt wird, ist beispielhaft in der Figur 9 illustriert. In Schritt 901 empfängt das Modul von einem Benutzer oder über die Ein-/Ausgabeschnittstelle einen Instanzidentifikator. In Schritten 902, 903 sucht das Modul daraufhin in der Datenbank 40 den zugehörigen Instanzdeskriptor auf und liest aus dem Instanzdeskriptor mindestens einen Teil der Instanzattribute aus, die dem Instanzidentifikator zugeordnet sind, darunter auch den Typidentifikator, der dem Instanzidentifikator zugeordnet ist. Das Modul sucht daraufhin in der Datenbank 40 den zugeordneten Typdeskriptor auf und liest in Schritt 904 mindestens einen Teil der zugeordneten Typattribute aus dem Typdeskriptor aus. Schliesslich sucht das Modul in Schritt 905 den Ausnahmedeskriptor auf, der dem Instanzidentifikator zugeordnet ist. Wenn der Ausnahmedeskriptor leer ist oder nicht existiert (Verzweigung 906), erstellt das Modul in Schritt 909 aus mindestens einem Teil der ausgelesenen Attribute direkt einen Objektdatensatz und gibt diesen in Schritt 910 über die Ein-/Ausgabeschnittstelle 74 aus. Falls andererseits der Ausnahmedeskriptor existiert und nicht leer ist, überprüft das Modul, ob der Ausnahmedeskriptor sich auf eines der ausgelesenen Typattribute bezieht. Falls dies der Fall ist, übersteuert das Modul in Schritt 907 das entsprechende Typattribut mit dem im Ausnahmedeskriptor angegebenen Wert. Zusätzlich kann das Modul in Schritt 908 ein Markierungsflag erstellen, welches anzeigt, dass der Wert des entsprechenden Typattributs übersteuert wurde. Entsprechend wird der anschliessend in Schritt 909 erstellte Objektdatensatz nun den übersteuerten Wert des Typattributs sowie das Markierungflag enthalten.

Mit Hilfe des Ausgabemoduls können beispielsweise vollständige Listen aller Instanzen eines bestimmten Elements (z.B. eine Türliste) erstellt werden. Die genannten Programmmodule sind auch als Schnittstelle zu einem 3D-CAD-System nutzbar.

Die vorstehend erläuterte Datenstruktur ermöglicht eine widerspruchsfreie Darstellung der durch Gebäudeinformationssystem modellierten realen Objekte. Insbesondere ermöglicht die Datenstruktur ein Gebäudeinformationssystem mit den folgenden Eigenschaften:
- Jedes reale Objekt kann interpretationsfrei einer Instanz eines Elements im Elementplan zugewiesen werden.
- Jede Instanz eines Elements führt einen Typidentifikator, der das reale Objekt einem bestimmten Typ zuordnet.
- Die Typdeskriptoren können einen zwischen den Fachdisziplinen koordinierten Bauteilkatalog abbilden. Mittels des Typidentifikators verweist der Instanzdeskriptor in diesem Fall auf den Bauteilkatalog. Der Bauteilkatalog verwaltet ausgewählte Typattribute.
- Ausgewählte Instanzattribute ergeben sich phasenspezifisch aus den Fachmodellen. Auch gewisse Typattribute können phasenspezifisch in den Fachmodellen enthalten sein.
- Sind Typattribute im Fachmodell vorhanden, haben sie Vorrang vor den Definitionen des interdisziplinären Bauteilkatalogs. Bei Abweichungen visualisiert ein Koordinationsmodell diese datentechnischen Kollisionen.

Es versteht sich, dass vielfältige Modifikationen des vorstehend nur beispielhaft beschriebenen Gebäudeinformationssystems möglich sind, und dass die Erfindung nicht auf die vorstehend beschriebenen Ausgestaltungen beschränkt ist.

## Patentansprüche

1. Digitales Gebäudeinformationssystem zur speicherplatzschonenden und redundanzarmen Erfassung von Eigenschaften einer Vielzahl von Objekten eines Gebäudes, wobei die Objekte verschiedenen Elementklassen (E) zugeordnet sind, und wobei das Gebäudeinformationssystem eine Datenbank (40) umfasst, die folgende Deskriptoren enthält:
mindestens einen Instanzdeskriptor (511; 521) für mindestens eine Elementklasse (E), wobei jeder Instanzdeskriptor einer Instanz (I) der betreffenden Elementklasse (E) zugeordnet ist und Werte für eine Mehrzahl von Instanzattributen umfasst, darunter einen eindeutigen Instanzidentifikator und einen Typidentifikator für einen zugeordneten Typ (T);
mindestens einen Typdeskriptor (512; 522) für jede Elementklasse (E), wobei jeder Typdeskriptor einem Typ (T) der betreffenden Elementklasse (E) zugeordnet ist und Werte für eine Mehrzahl von Typattributen umfasst, darunter einen eindeutigen Typidentifikator, und
mindestens einen Ausnahmedeskriptor (513; 523) für mindestens eine Elementklasse (E), wobei jeder Ausnahmedeskriptor einer Instanz (I) der betreffenden Elementklasse (E) zugeordnet ist und angibt, dass bei der zugeordneten Instanz (I) mindestens eines der Typattribute (517) durch einen Ausnahmewert übersteuert ist.

2. Digitales Gebäudeinformationssystem nach Anspruch 1, wobei die Datenbank (40) zusätzlich für mindestens eine Elementklasse (E) einen Elementdeskriptor (41; 42) enthält, wobei der Elementdeskriptor mindestens umfasst:
einen eindeutigen Elementidentifikator (411; 421);
Informationen (412; 422) zum Aufbau der zugehörigen Instanzdeskriptoren (511; 521) und Typdeskriptoren (512; 522).

3. Digitales Gebäudeinformationssystem nach einem der vorhergehenden Ansprüche,
wobei mindestens eines der Instanzattribute mindestens einer Elementklasse eine Relation (315) zu einer Instanz einer anderen Elementklasse definiert; und/oder
wobei mindestens eines der Typattribute mindestens einer Elementklasse eine Relation zu einem Typ einer anderen Elementklasse definiert.

4. Digitales Gebäudeinformationssystem nach einem der vorhergehenden Ansprüche, wobei die Instanzattribute und/oder Typattribute Angaben zum Autor mindestens eines Attributswerts umfassen.

5. Digitales Gebäudeinformationssystem nach einem der vorhergehenden Ansprüche, wobei die Instanzattribute und/oder Typattribute mindestens eine Benutzerberechtigung umfassen, wobei die Benutzerberechtigung mindestens eine Lese- oder Schreibberechtigung mindestens eines Benutzers oder einer Benutzergruppe für mindestens einen Attributswert definiert.

6. Digitales Gebäudeinformationssystem nach einem der vorhergehenden Ansprüche, welches ausserdem mindestens eines der folgenden Module aufweist:
ein Element-Modifikationsmodul (77), das dazu ausgebildet ist, Elementdeskriptoren zur Datenbank (40) hinzuzufügen oder Elementdeskriptoren in der Datenbank (40) zu verändern;
ein Instanz-Modifikationsmodul (78), das dazu ausgebildet ist, Instanzdeskriptoren zur Datenbank (40) hinzuzufügen oder Instanzdeskriptoren in der Datenbank (40) zu verändern;
ein Typ-Modifikationsmodul (79), das dazu ausgebildet ist, Typdeskriptoren zur Datenbank (40) hinzuzufügen oder Typdeskriptoren in der Datenbank (40) zu verändern; und
ein Ausnalune-Modifikationsmodul (80), das dazu ausgebildet ist, Ausnahmedeskriptoren zur Datenbank (40) hinzuzufügen oder Ausnahmedeskriptoren in der Datenbank (40) zu verändern.

7. Digitales Gebäudeinformationssystem nach einem der vorhergehenden Ansprüche, welches ein Erfassungsmodul (81) aufweist, das dazu ausgebildet ist, folgendes Verfahren auszuführen:
Empfangen (801) eines Objektdatensatzes für ein Objekt eines Gebäudes, wobei der Objektdatensatz eine Instanz (I) einer Elementklasse (E) beschreibt und ein oder mehrere Attributwerte, darunter einen Instanzidentifikator, enthält;
Überprüfen, ob der Objektdatensatz mindestens einen Attributwert enthält, der zu einem Typattribut gehört;
falls der Objektdatensatz mindestens einen Attributwert enthält, der zu einem Typattribut gehört, Auslesen (803) eines zur Instanz (I) zugehörigen Typdeskriptors aus der Datenbank (40) und Überprüfen (804), ob Attributwerte des Objektdatensatzes von Typattributwerten des ausgelesenen Typdeskriptors abweichen;
falls eine Abweichung mindestens eines Attributwerts des Objektdatensatzes von einem Typattributwert des ausgelesenen Typdeskriptors festgestellt wird:
(i) Überprüfen (806), ob ein entsprechender Ausnahmedeskriptor in der Datenbank existiert; und
(ii) falls kein entsprechender Ausnahmedeskriptor existiert, Erstellen (808) eines entsprechenden Ausnahmedeskriptors.

8. Digitales Gebäudeinformationssystem nach einem der vorhergehenden Ansprüche, welches ausserdem ein Ausgabemodul (82) aufweist, das dazu ausgebildet ist, folgendes Verfahren auszuführen:
Empfangen (901) eines Instanzidentifikators;
Auslesen (902) mindestens eines Teils der Instanzattribute, die dem Instanzidentifikator zugeordnet sind, aus der Datenbank (40);
Auslesen (903) des Typidentifikators, der dem Instanzidentifikator zugeordnet ist, aus der Datenbank;
Auslesen (904) mindestens eines Teils der Typattribute, die dem Typidentifikator zugeordnet sind, aus der Datenbank (40);
Auslesen (905) des Ausnahmedeskriptors, der dem Instanzidentifikator zugeordnet ist, aus der Datenbank (40);
Überprüfen (906), ob der Ausnahmedeskriptor leer ist;
falls der Ausnahmedeskriptor nicht leer ist und sich auf eines der ausgelesenen Typattribute bezieht, Übersteuern (907) mindestens eines der ausgelesenen Typattribute entsprechend dem Ausnahmedeskriptor;
Erstellen (909) eines Objektdatensatzes, der mindestens einen Teil der ausgelesenen Instanzattribute und der ausgelesenen Typattribute umfasst; und
Ausgeben (810) des Objektdatensatzes.

9. Digitales Gebäudeinformationssystem nach Anspruch 8, wobei der Objektdatensatz mindestens ein Markierungsfeld umfasst, um übersteuerte Typattribute zu markieren, und wobei das Verfahren das Erzeugen (908) des Markierungsfelds umfasst.

10. Digitales Gebäudeinformationssystem nach einem der vorhergehenden Ansprüche, wobei sich die Elementklassen (E), für die die Datenbank Informationen enthält, auf mindestens eine der folgenden Objektarten beziehen:
Geschoss;
Raum;
Nutzungseinheit;
tragende Wand;
nichttragende Wand;
Bodenaufbau;
Abhangdecke;
Halterung;
Stütze;
Tragwerk;
Fundation;
Tür;
Fenster;
Fassade;
Treppe;
Rampe;
Ausstattung;
Raumausstattung;
Sanitärausstattung;
Geschossdecke;
Platzresemation;
Betonelement;
Beleuchtung;
Leichtbauwand;
Wandoberfläche;
Sanitärapparat;
Verkleidung;
Küche;
Aussparung;
Schottung.

11. Nichtflüchtiger computerlesbarer Datenträger enthaltend eine darin gespeicherte Datenbank und darin gespeicherte Anweisungen, die bei der Ausführung durch einen Prozessor ein digitales Gebäudeinformationssystem nach einem der vorhergehenden Ansprüche implementieren.

12. Computerimplementiertes Verfahren zum Erfassen eines Objektdatensatzes für ein Objekt eines Gebäudes, wobei das Verfahren die Ausführung der folgenden Schritte durch einen Computer umfasst:
Empfangen (801) des Objektdatensatzes, wobei der Objektdatensatz eine Instanz (I) einer Elementklasse (E) beschreibt und ein oder mehrere Attributwerte, darunter einen Instanzidentifikator, enthält;
Überprüfen, ob der Objektdatensatz mindestens einen Attributwert enthält, der zu einem Typattribut gehört;
falls der Objektdatensatz mindestens einen Attributwert enthält, der zu einem Typattribut gehört, Auslesen (803) eines zur Instanz (I) zugehörigen Typdeskriptors aus der Datenbank (40) und Überprüfen (804), ob Attributwerte des Objektdatensatzes von Typattributwerten des ausgelesenen Typdeskriptors abweichen;
falls eine Abweichung mindestens eines Attributwerts des Objektdatensatzes von einem Typattributwert des ausgelesenen Typdeskriptors festgestellt wird:
(i) Überprüfen (806), ob ein entsprechender Ausnahmedeskriptor in der Datenbank (40) existiert; und
(ii) falls kein entsprechender Ausnahmedeskriptor existiert, Erstellen (808) eines entsprechenden Ausnahmedeskriptors.

13. Computerimplementiertes Verfahren zum Erstellen und Ausgeben eines Objektdatensatzes für ein Objekt eines Gebäudes, wobei das Verfahren die Ausführung der folgenden Schritte durch einen Computer umfasst:
Empfangen (901) eines Instanzidentifikators für das Objekt;
Auslesen (902) mindestens eines Instanzattributs, das dem Instanzidentifikator zugeordnet ist, aus einer Datenbank (40);
Auslesen (903) eines Typidentifikators, der dem Instanzidentifikator zugeordnet ist, aus der Datenbank (40);
Auslesen (904) mindestens eines Typattributs, das dem Typidentifikator zugeordnet ist, aus der Datenbank (40);
Auslesen (905) eines Ausnahmedeskriptors, die dem Instanzidentifikator zugeordnet ist, aus der Datenbank (40);
Überprüfen (906) des Ausnahmedeskriptors;
falls der Ausnahmedeskriptor nicht leer ist und sich auf eines der ausgelesenen Typattribute bezieht, Übersteuern (907) mindestens eines der ausgelesenen Typattribute entsprechend dem Ausnahmedeskriptor;
Erzeugen (909) eines Objektdatensatzes, der mindestens einen Teil der ausgelesenen Instanzattribute und der ausgelesenen und gegebenenfalls übersteuerten Typattribute umfasst; und
Ausgeben (910) des Objektdatensatzes.

14. Computerimplementiertes Verfahren nach Anspruch 13, wobei der Objektdatensatz mindestens ein Markierungsfeld umfasst, um übersteuerte Typattribute zu markieren, und wobei das Verfahren das Erzeugen (908) des Markierungsfelds umfasst.

15. Nichtflüchtiger computerlesbarer Datenträger enthaltend darin gespeicherte Anweisungen, die bei der Ausführung durch einen Prozessor das Verfahren nach einem der Ansprüche 12-14 durchführen.
